# FASCICULE DE BREVET EUROPEEN

(11) **EP 1 423 627 B1**
(45) Date de publication et mention de la délivrance du brevet: **04.01.2006**
(21) Numéro de dépôt: 02794613.6
(22) Date de dépôt: 30.07.2002
(51) Int. Cl.: F16D 65/20, F16D 55/226

(54) **CYLINDRE DE FREIN A ACTIONNEMENT MECANIQUE ET HYDRAULIQUE COMPRENANT UN SYSTEME DE BALLE ET RAMPE**
MECHANISCH UND HYDRAULISCH BETÄTIGTER BREMSZYLINDER MIT KUGEL- UND RAMPENSYSTEM
MECHANICAL AND HYDRAULIC ACTUATING BRAKE CYLINDER COMPRISING A BALL AND RAMP SYSTEM

(30) Priorité: 08.08.2001 FR 0110677
(43) Date de publication de la demande: 02.06.2004
(73) Titulaire: ROBERT BOSCH GMBH, 70442 Stuttgart (DE)
(72) Inventeur: GERARD, Jean-Louis, F-93170 Bagnolet (FR); LE DEIT, Gérard, F-77181 Courtry (FR)
(74) Mandataire: Hurwic, Aleksander Wiktor
(86) Numéro de dépôt international: PCT/FR2002/002730
(87) Numéro de publication internationale: WO 2003/014587

(56) Documents cités:
- FR-A- 2 793 536
- GB-A- 1 129 106
- US-A- 3 800 920
- US-A- 3 820 635
- US-A- 4 658 939

## Description

La présente invention concerne un cylindre de frein à actionnement mécanique et hydraulique de dimensions réduites et un frein de véhicule automobile comprenant un tel cylindre.

Les cylindres de freins à actionnement hydraulique et mécanique comprennent généralement un piston à déplacement axial qui pousse une plaque support de garniture de friction en direction d'un disque de freinage, ce déplacement étant provoqué soit par une augmentation de pression d'un fluide injecté dans le cylindre, soit sous l'action mécanique de pièces mobiles internes au cylindre.

De telles pièces mobiles comprennent presque toujours, d'une part, un mécanisme de rampes à billes dont le rôle est de transformer un mouvement de rotation en un mouvement de translation, d'autre part un ensemble vis-écrou qui remplit une fonction de réglage et vise à compenser l'usure des garnitures de flexion.

Ces pièces mobiles internes sont relativement nombreuses, ce qui entraîne au moins deux conséquences : d'une part, elles occupent une certaine place, ce qui limite les possibilités de compactage du cylindre, d'autre part, leur montage, relativement complexe du fait de leur agencement, nécessite des moyens manuels ou automatiques relativement coûteux.

La présente invention vise à proposer un cylindre de frein comportant un nombre réduit de pièces, cette réduction du nombre de pièces permettant, d'une part, une diminution de la taille du cylindre, d'autre part, une simplification sensible de sa fabrication.

La présente invention a pour objet un cylindre de frein à actionnement mécanique et hydraulique pour véhicule automobile, comprenant un piston à déplacement axial, un arbre pivotant dont une partie, accessible depuis l'extérieur du cylindre, est destinée à subir un couple de rotation résultant d'un actionnement mécanique du frein, un mécanisme de rampes à billes transformant les mouvements de rotation de l'arbre pivotant en mouvements de translation du piston et comprenant un plateau tournant solidaire en rotation de l'arbre pivotant, un plateau mobile et des billes logées dans des nervures à rampes ménagées dans les faces en regard des deux plateaux, ledit plateau mobile étant constitué par le piston, comportant un ensemble vis-écrou dont la vis est solidaire du plateau tournant de la rampe à billes, et l'écrou comportant un moyen débrayable d'immobilisation en rotation, qui bloque ledit écrou lors d'une commande hydraulique à pression élevée du frein, caractérisé en ce que, le moyen d'immobilisation est constitué par un embrayage conique, par exemple formé par une collerette prévue sur l'écrou, dont une arête chanfreinée s'appuie, sous l'action d'un moyen de rappel, sur un siège tronconique fixe.

Le cylindre de frein selon l'invention est avantageux en ce qu'il comprend un mécanisme de rampes à billes constitué partiellement par le piston, de sorte que la transformation du mouvement de rotation de l'arbre pivotant en un mouvement de translation du piston est directement effective sur le piston sans interposition d'aucune pièce supplémentaire.

Le gain concernant le nombre total de pièces du cylindre résulte de la suppression d'un des plateaux du mécanisme de rampes à billes, ainsi que de la suppression des pièces intermédiaires entre le plateau mobile du système de rampes à billes et le piston.

En outre, utiliser le piston comme plateau mobile permet de tirer profit du fait que le piston est mobile en translation mais fixe en rotation en raison de sa solidarisation avec la plaque support de la garniture de friction. Cette caractéristique de mobilité du piston, qui préexiste dans tout cylindre de frein de configuration classique, rend l'utilisation du piston comme plateau mobile particulièrement avantageuse car aucun moyen supplémentaire n'est requis pour rendre le piston, en tant que plateau mobile, libre en translation mais fixe en rotation.

De ce fait, le cylindre de frein selon l'invention fait l'économie, non seulement du plateau mobile, mais également des moyens structurels, tels que vis de blocage, habituellement indispensables au blocage en rotation du plateau mobile.

Dans un mode de réalisation particulier de l'invention, le cylindre de frein comporte un ensemble vis-écrou dont la vis est solidaire du plateau tournant de la rampe à billes.

Avantageusement, l'écrou de cet ensemble comporte un moyen débrayable d'immobilisation en rotation, qui bloque ledit écrou lors d'une commande hydraulique à pression élevée du frein.

Un tel moyen d'immobilisation peut être constitué par un embrayage conique par exemple formé par une collerette prévue sur l'écrou, dont une arête chanfreinée s'appuie, sous l'action d'un moyen de rappel, sur un siège tronconique fixe.

Selon une caractéristique particulière, la vis solidaire du plateau mobile est liée au piston par un moyen élastique.

En cas de translation du piston lors d'un freinage, ce moyen élastique, qui peut être un ressort hélicoïdal, se déforme élastiquement et exerce sur la vis une force tendant à lui faire suivre le piston.

La présente invention a également pour objet un frein pour véhicule automobile comportant un cylindre de frein tel que décrit ci-dessus.

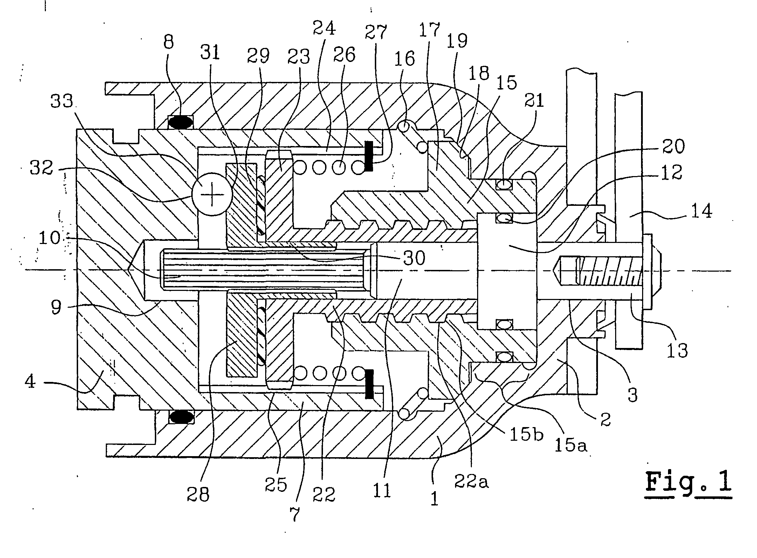

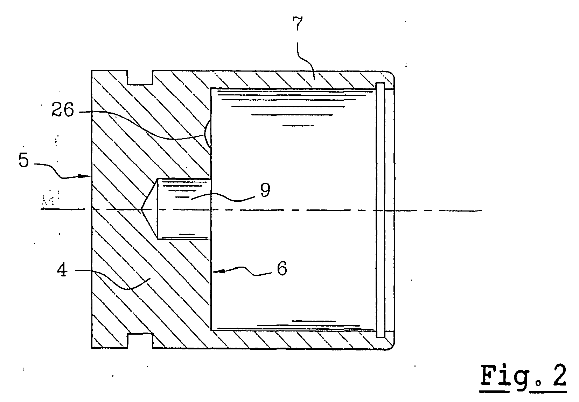

Afin de faciliter la compréhension de l'invention, on va en décrire maintenant un mode de réalisation, fourni à titre d'exemple non limitatif, à l'aide des dessins annexés qui comprennent :
- une figure 1 qui est une vue en coupe axiale d'un cylindre de frein,
- une figure 2 qui est une vue en coupe axiale du piston du cylindre de la figure 1.

La figure 1 représente, en coupe, un cylindre de frein selon l'invention.

Ce cylindre comprend un corps 1 de forme sensiblement cylindrique, muni d'une première extrémité partiellement obturée par une paroi 2 ne laissant qu'un passage axial 3 et d'une seconde extrémité ouverte sur toute sa section intérieure. Cette section intérieure demeure constante depuis ladite seconde extrémité du corps jusqu'à environ la moitié de sa longueur, délimitant une chambre cylindrique dans laquelle coulisse un piston 4 de forme extérieure correspondante.

Le piston 4 comporte, à l'opposé de sa face extérieure 5 d'appui contre une plaque-support de plaquette, d'une part une paroi intérieure constituée par un fond 6 globalement plan et d'autre part une jupe périphérique 7 qui définit la forme extérieure cylindrique du piston et délimite un espace intérieur audit piston, ouvert en direction de la première extrémité du corps. Un joint d'étanchéité 8, logé dans une gorge annulaire intérieure de la chambre cylindrique du corps recevant le piston, assure l'étanchéité entre le piston et ladite chambre cylindrique.

Le piston 4, une fois solidarisé à la plaque-support, ne peut plus tourner autour de son axe longitudinal (qui est aussi celui du corps 1) du fait que ladite plaque-support est immobilisée en rotation.

Un alésage axial 9 est réalisé dans le piston, à partir de son fond 6 en direction de la plaque-support. Cet alésage 9 libère l'espace nécessaire à l'évolution de l'extrémité cannelée 10 d'un arbre 11 qui s'étend axialement dans le corps jusqu'à sa première extrémité dont il traverse le passage axial 3. L'extrémité 12 de l'arbre 11 en saillie du corps est directement solidarisée à un levier 14 d'actionnement de frein de parking.

L'arbre 11 comporte une collerette 12, située au voisinage de la paroi 2 et constituant un épaulement limitant le déplacement axial de l'arbre en direction du passage 3.

La collerette 13 est logée dans un écrou 15 dont une partie d'extrémité 15a occupe, aux jeux près, l'espace annulaire séparant ladite collerette 12 de la partie du corps 1 se trouvant au droit de celle-ci.

En dehors de cette partie d'extrémité, l'écrou comporte un taraudage intérieur dont les filets 15b sont visibles sur la figure 1.

L'écrou 15 est retenu axialement contre la paroi 2 du corps par un ressort-cuvette 16 encastré dans le corps. Ce ressort-cuvette 16 autorise la rotation de l'écrou 15, sous réserve que les frottements engendrés par ce mouvement de rotation soient vaincus.

En saillie de sa paroi latérale externe, l'écrou 15 comporte une collerette 17 dont l'arête 18 opposée au piston 4 est chanfreinée en tronc de cône, tandis que la partie 19 de la paroi latérale intérieure du corps située en regard de cette arête 18 forme un siège tronconique, sensiblement de même angle. L'arête chanfreinée 18 et le siège tronconique 19 forment un embrayage conique. L'extrémité de l'écrou voisine de la paroi 2 du corps demeure en retrait de celle-ci lorsque l'arête chanfreinée 18 de la collerette prend appui contre le siège tronconique 19 du corps, de sorte que l'écrou 15 est susceptible de s'accoupler au corps 4 pour s'y solidariser en rotation lorsqu'il est soumis à une force dirigée vers la paroi 2.

L'écrou 15, l'arbre 11 et le corps 3 sont tous trois coaxiaux, c'est pourquoi il est préférable qu'un jeu suffisant soit ménagé entre deux d'entre eux, par exemple entre la collerette 12 de l'arbre et l'écrou 15.

Des joints d'étanchéité 20, 21 sont logés dans des gorges annulaires entre la collerette 12 et l'écrou 15 d'une part, entre l'écrou 15 et le corps 1 d'autre part, de sorte que la cavité intérieure du corps est rendue étanche, en étant délimitée par le fond 6 et la jupe 7 du piston, la paroi latérale intérieure du corps, l'écrou 15 et la collerette 12 de l'arbre 10.

Une douille filetée 22 ou vis, dont les filets 22a coïncident avec ceux 15b du taraudage de l'écrou 15, est vissée dans ce dernier en demeurant autour de l'arbre 11. Ladite douille se prolonge en direction du piston au-delà de l'écrou, par une embase annulaire plane 23 dont la périphérie se trouve au voisinage de la jupe 7 du piston, laquelle est munie de cannelures internes 24 qui s'engagent dans des échancrures axiales 25 de l'embase 23, assurant ainsi la solidarisation en rotation de la douille filetée avec le piston, c'est-à-dire son immobilisation en rotation.

L'embase 23 est en outre soumise à la pression d'un ressort hélicoïdal 26, comprimé entre ladite embase 23 et un circlip 27 constituant une butée solidaire de la jupe.

Enfin, entre l'embase 23 et le fond 6 du piston, se trouve un plateau circulaire 28 séparé de l'embase 23 par une rondelle anti-friction 29. Le plateau 28 est solidaire en rotation de l'arbre 11 grâce à un manchon rainuré 30, d'un seul tenant avec ledit plateau, engagé autour de l'extrémité cannelée 10 dudit arbre.

La face du plateau dirigée vers le piston est munie de trois rampes à billes 31, bien connues dans le domaine de l'invention mais habituellement en un autre emplacement du mécanisme de frein.

En regard de ces rampes 31, le fond 6 du piston comporte également trois rampes à billes 32 de pente inversée, une bille 33 étant emprisonnée dans chaque paire de rampes résultant de la mise en regard d'une rampe du piston avec une rampe du plateau.

L'ensemble formé par le fond 6 du piston, les billes 33 et le plateau 28 constitue un système de rampes à billes dont la fonction est d'écarter le plateau du piston lorsque ces derniers pivotent l'un part rapport à l'autre, du fait que les billes montent sur leurs rampes.

Dans l'exemple représenté, le piston est réalisé en acier, matière suffisamment dure pour supporter le roulement des billes dans leurs rampes. Avec un piston en un alliage moins dur, tel qu'un alliage d'aluminium, ou encore en résine phénolique, on prévoira avantageusement une pièce dure rapportée sur le piston pour constituer sa face en regard du plateau, ou à tout le moins pour former les rampes recevant les billes. Un traitement de surface du piston peut également être envisagé.

Le fonctionnement du mécanisme de frein va maintenant être décrit.

Ce mécanisme peut être actionné d'une part hydrauliquement, ce qui correspond à la commande de roulement déclenchée par la pédale de frein du véhicule, d'autre part mécaniquement, ce qui correspond à la commande de stationnement déclenchée par le levier ou la pédale de frein de parking.

En actionnement hydraulique, un fluide hydraulique sous pression est injecté à l'intérieur de la cavité intérieure du corps, dont la délimitation a été précédemment détaillée.

La pression régnant à l'intérieur de cette cavité a notamment pour effet de repousser le piston 4 vers l'extérieur du corps, ce qui assure le freinage par déplacement de la plaque-support 5 en direction du disque de frein.

La pression a également pour effet de plaquer la collerette 12 de l'arbre contre la paroi 2 opposée au piston.

Le déplacement du piston tend à comprimer davantage le ressort hélicoïdal 26, et, par conséquent, à accroître l'effort axial exercé par ce ressort sur la douille filetée 22. En conséquence, celle-ci exerce à son tour, sur l'écrou 15 et par l'intermédiaire des filets 22a et 15b, une force axiale dirigée vers le piston et un couple de rotation visant faire tourner l'écrou pour dévisser ladite douille de l'écrou.

Ce dernier est en outre soumis par le fluide sous pression à une force qui tend à plaquer son arête chanfreinée 18 contre le siège tronconique 19 du corps. Cette force est le produit mathématique de la pression du fluide par la section cylindrique d'étanchéité de l'écrou, c'est-à-dire sa section transversale dans sa partie non soumise à la pression, qui est située au droit de la collerette 12.

L'écrou est donc soumis à deux forces antagonistes, l'une dirigée vers le piston 4 et transmise par le ressort 26, l'autre dirigée vers la paroi 2 et résultant directement de l'action du fluide sous pression sur le piston.

Pour des pressions de fluide inférieures à une pression seuil définie comme étant la pression qui compense exactement l'action du ressort 26, l'embrayage conique libère l'écrou. Ce dernier peut alors tourner pour permettre à la douille de suivre le piston. Le frein se règle.

Pour des pressions de fluide supérieures à cette pression seuil, l'action du ressort demeure trop faible pour vaincre l'action du fluide sur l'écrou et l'embrayage conique reste collé. L'écrou ne peut pas tourner et le réglage du frein est inhibé.

De cette manière, le réglage s'interrompt avant que le frein ne soit complètement serré, ce qui évite de bloquer le frein dans cette position après relâchement de la pression du fluide hydraulique.

En actionnement mécanique, le levier de commande 14 imprime une rotation à l'arbre 11, lequel transmet le couple au plateau 28 par l'intermédiaire du manchon rainuré 30.

Le plateau se met à tourner par rapport au piston qui est immobilisé en rotation.

Les rampes à billes remplissent alors leur fonction d'écartement du plateau par rapport au piston.

Le plateau s'appuie, par l'intermédiaire de la rondelle antifriction 29, sur la douille filetée 22 qui est immobilisée en rotation par rapport au piston grâce aux cannelures 24.

La force axiale transmise par la douille à l'écrou plaque l'arête chanfreinée 18 contre le siège 19 et empêche la rotation de l'écrou. La douille ne peut donc se visser dans l'écrou et fournit la réaction permettant au plateau de pousser le piston vers l'extérieur du corps.

On voit que le fonctionnement du cylindre de frein précédemment décrit est fonctionnellement identique à celui d'un cylindre de frein conventionnel.

En revanche, dans sa réalisation concrète, il ne comporte que dix-sept pièces, à comparer avec les vingt et une pièces nécessaires pour constituer un cylindre de frein équivalent de structure conventionnelle.

Un autre avantage, mesurable concrètement, du cylindre de frein selon l'invention est sa réduction de longueur, laquelle réduction peut atteindre dix-sept millimètres.

## Revendications

1. Cylindre de frein à actionnement mécanique et hydraulique pour véhicule automobile, comprenant un piston (4) à déplacement axial, un arbre (11) pivotant dont une partie, accessible depuis l'extérieur du cylindre, est destinée à subir un couple de rotation résultant d'un actionnement mécanique du frein, un mécanisme de rampes à billes transformant les mouvements de rotation de l'arbre pivotant en mouvements de translation du piston et comprenant un plateau tournant (28) solidaire en rotation de l'arbre pivotant, un plateau mobile et des billes (33) logées dans des nervures à rampes ménagées dans les faces en regard des deux plateaux, ledit plateau mobile étant constitué par le piston (4), comportant un ensemble vis-écrou (22-15) dont la vis (22) est solidaire du plateau tournant (28) de la rampe à billes, et l'écrou (15) comportant un moyen débrayable (18, 19) d'immobilisation en rotation, qui bloque ledit écrou lors d'une commande hydraulique à pression élevée du frein, **caractérisé en ce que**, le moyen d'immobilisation est constitué par un embrayage conique (18, 19), par exemple formé par une collerette prévue sur l'écrou, dont une arête chanfreinée s'appuie, sous l'action d'un moyen de rappel, sur un siège tronconique fixe.

2. Cylindre de frein selon la revendication 1, **caractérisé en ce que** la vis (22) solidaire du plateau mobile (4) est liée au piston par un moyen élastique (26).

3. Frein pour véhicule automobile **caractérisé en ce qu'**il comporte un cylindre de frein selon l'une quelconque des revendications 1 ou 2.

## Patentansprüche

1. Bremszylinder mit mechanischer und hydraulischer Betätigung für ein Kraftfahrzeug, mit einem Kolben (4) mit axialer Verlagerung, einer Schwenkwelle (11), bei der ein von außerhalb des Zylinders zugänglicher Abschnitt ein Drehmoment erfahren soll, das aus einer mechanischen Betätigung der Bremse resultiert, einem Rampenmechanismus mit Kugeln, der die Drehbewegungen der Schwenkwelle in Translationsbewegungen des Kolbens umwandelt und eine drehfest mit der Schwenkwelle verbundene Drehscheibe (28), eine bewegliche Scheibe und Kugeln (33) aufweist, welche in mit Rampen versehenen Rippen angeordnet sind, welche in einander gegenüberliegenden Seiten der beiden Scheiben ausgebildet sind, wobei die bewegliche Scheibe durch den Kolben (4) gebildet ist und eine Baugruppe aus Schraube und Mutter (22-15) aufweist, bei der die Schraube (22) fest mit der Drehscheibe (28) der Kugelrampe verbunden ist und die Mutter (15) ein ausrückbares Mittel (18, 19) zur Drehblockierung aufweist, das die Mutter bei einer hydraulischen Steuerung der Bremse bei hohem Druck blockiert, **dadurch gekennzeichnet, dass** das Blockierungsmittel aus einer konischen Kupplung (18, 19) besteht, die zum Beispiel aus einem an der Mutter vorgesehenen Kragen gebildet ist, bei dem sich eine abgeschrägte Kante unter der Wirkung eines Rückstellmittels an einer kegelstumpfartigen, festen Aufnahme abstützt.

2. Bremszylinder nach Anspruch 1, **dadurch gekennzeichnet, dass** die fest mit der beweglichen Scheibe (4) verbundene Schraube (22) durch ein elastisches Mittel (26) mit dem Kolben verbunden ist.

3. Bremse für ein Kraftfahrzeug, **dadurch gekennzeichnet, dass** sie einen Bremszylinder nach Anspruch 1 oder 2 aufweist.

## Claims

1. Mechanically and hydraulically actuated brake cylinder for a motor vehicle, comprising an axially moveable piston (4), a pivoting shaft (11) of which a part, accessible from outside the cylinder, is intended to experience a rotational torque resulting from mechanical actuation of the brake, a ball-ramp mechanism converting the rotational movements of the pivoting shaft into translational movements of the piston and comprising a rotary plate (28) that rotates as one with the pivoting shaft, a moving plate and balls (33) housed in ramp ribs made in the facing faces of the two plates, **characterized in that** the said moving plate consists of the piston (4).

2. Brake cylinder according to Claim 1, **characterized in that** it comprises a screw-nut assembly (22-15) of which the screw (22) is secured to the rotating plate (28) of the ball-ramp.

3. Brake cylinder according to Claim 2, **characterized in that** the nut (15) comprises a disengageable means (18, 19) of immobilizing it in terms of rotation, which blocks the said nut during a high-pressure hydraulic control of the brake.
